# EUROPEAN PATENT SPECIFICATION

(11) **EP 3 141 473 B1**
(45) Date of publication and mention of the grant of the patent: **15.04.2020**
(21) Application number: 16178627.2
(22) Date of filing: 08.07.2016
(51) Int. Cl.: B64C 7/00, B64C 23/00, B64C 27/10

(54) **DRAG REDUCTION OF HIGH SPEED AIRCRAFT WITH A COAXIAL-ROTOR SYSTEM**
WIDERSTANDSREDUZIERUNG EINES HOCHGESCHWINDIGKEITSFLUGZEUGS MIT EINEM KOAXIALROTORSYSTEM
RÉDUCTION DE LA TRAÎNÉE D'AVION À GRANDE VITESSE AVEC UN SYSTÈME DE ROTOR COAXIAL

(30) Priority: 11.09.2015 US 201562217444 P
(43) Date of publication of application: 15.03.2017
(73) Proprietor: Sikorsky Aircraft Corporation, Stratford, CT 06615 (US)
(72) Inventor: FLOREA, Razan Virgil, Manchester, CT 06042 (US); BOWLES, Patrick, Glastonbury, CT 06033 (US); BOTROS, Barbara Brenda, Vernon, CT 06066 (US); MIN, Byung Young, Glastonbury, CT 06033 (US); MATALANIS, Claude G., Longmeadow, MA 01106 (US); WAKE, Brian E., South Glastonbury, CT 06073 (US)
(74) Representative: Schmitt-Nilson Schraud Waibel Wohlfrom Patentanwälte Partnerschaft mbB

(56) References cited:
- US-A1- 2006 269 411
- US-A1- 2009 084 891
- US-A1- 2014 030 103
- US-A1- 2014 091 172

## Description

Exemplary embodiments of the invention relate to a rotor hub fairing system, and more particularly, to a rotor hub fairing system that reduces overall drag for a high speed rotary wing aircraft having a counter-rotating, coaxial rotor system.

Typically, aerodynamic drag associated with a rotor system of a rotary wing aircraft is a significant portion of the overall aircraft drag, commonly 25% to 30% for conventional single-rotor helicopters. The rotor system drag increases for a rotary wing aircraft having a counter-rotating coaxial system primarily due to the additional rotor hub and the interconnecting main rotor shaft assembly between the upper and lower rotor systems. For high speed rotary-wing aircrafts, the increased drag resulting from the counter-rotating coaxial rotor system may cause a relatively significant power penalty and/or limit aircraft speed.

The aerodynamic drag of the dual counter-rotating, coaxial rotor system is generated by three main components - the upper hub, the lower hub, and the interconnecting main rotor shaft assembly. The drag contributions may be approximately 40% for each of the rotor hubs, and 20% for the interconnecting shaft assembly; however, the effects are highly interactional, i.e., flow separation over one component may result in more significant flow separation and higher drag on another component.

Fairings have been used in conventional rotary wing aircraft to reduce drag. The implementation of a fairing in an application having airfoils with a large thickness to chord ratio, however, is more complex because of the negative restoring moment that thick airfoils tend to exhibit. Failure to compensate for this may result in the need to incorporate a more complex mechanism and controller, thus, reducing the benefits of the fairing.

US 2014/0030103 A1 shows a rotor hub fairing system for use in a counter-rotating, coaxial rotary wing aircraft including an upper hub fairing defined about an axis. A lower hub fairing is similarly defined about the axis. An airfoil shaped shaft fairing is disposed between the upper hub fairing and the lower hub fairing. The airfoil shaped shaft fairing has a thickness to chord (t/c) ratio in the range of about 20% and about 45%

US 2006/0269411 A1 shows a rotor hub fairing system including an upper hub fairing, a lower hub fairing and a shaft fairing therebetween. The rotor hub fairing system is sized and configured to reduce the overall drag on a dual, counter-rotating, coaxial rotor system. Preferably, the rotor hub fairing is fully integrated. The shaft fairing preferably includes a minimal thickness at the midsection to reduce drag with an increasing thickness adjacent the upper and lower hub fairings to reduce the flow separation on the hub fairing surfaces without overly excessive drag.

US 2009/0084891 A1 shows a de-rotation system including a first ring gear defined about an axis of rotation, a second ring gear defined about the axis of rotation and a gear set in meshing engagement with the first ring gear and the second ring gear to control a position of a housing about the axis of rotation.

US 2014/0091172 A1 shows a rotary wing vehicle including a counter-rotating coaxial rotor system having rotors with each rotor having a separate motor to drive the rotors about a common rotor axis of rotation. The rotor system comprises a mast shroud for a mast between the rotors.

The invention relates to a rotor hub fairing system and coaxial rotor system according to the appended claims.

According to an embodiment, a rotor hub fairing system for use in a counter-rotating, coaxial rotor system is provided according to claim 1.

In addition to one or more of the features described above, in further embodiments a horizontal cross-section of the shaft fairing is generally airfoil shaped.

In addition to one or more of the features described above, in further embodiments the shaft fairing has a shape complementary to the upper hub fairing and the lower hub fairing.

According to the invention, the shaft fairing includes a top surface positioned adjacent the upper rotor hub and at least a portion of the top surface is angled downwardly.

The angled portion of the top surface begins at a portion of the top surface adjacent a periphery of the upper hub fairing.

In addition to one or more of the features described above, in further embodiments wherein the shaft fairing includes a trailing edge extending aft of the upper hub fairing and the lower hub fairing. The angled portion of the top surface extends to the trailing edge such that an overall height of the shaft fairing at the trailing edge is less than an overall height of the shaft fairing between the upper hub fairing and the lower hub fairing.

According to another embodiment, a coaxial rotor system is provided including an upper rotor system including an upper rotor hub which rotates about an axis of rotation and a lower rotor system including a lower rotor hub which rotates about the axis of rotation and a rotor hub fairing system according to claim 1. An upper hub fairing at least partially surrounds a portion of said upper rotor hub and a lower hub fairing at least partially surrounds a portion of said lower rotor hub. A shaft fairing is positioned between the upper hub fairing and the lower hub fairing. The geometry of the shaft fairing is configured to encourage a wake adjacent the upper hub fairing to form collectively with a wake adjacent the lower hub fairing.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIGS. 1A and 1B are general side views of an exemplary rotary wing aircraft for use with the present invention;
FIG. 2 is an expanded partial phantom view of a counter-rotating coaxial rotor system with a rotor hub fairing system;
FIG. 3 is an oblique aft perspective view of a conventional rotor hub fairing system;
FIG. 4 is a side view of a rotor hub fairing system with pressure contours from computational fluid dynamics simulations according to an embodiment not covered by the invention; and
FIG. 5 is a side view of another rotor hub fairing system with pressure contours from computational fluid dynamics simulations according to an embodiment.

The detailed description explains embodiments of the invention, together with advantages and features, by way of example with reference to the drawings.

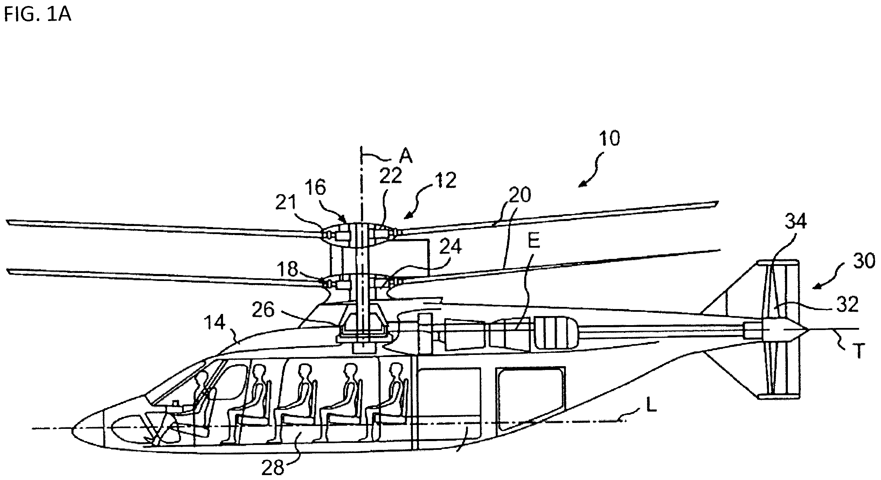

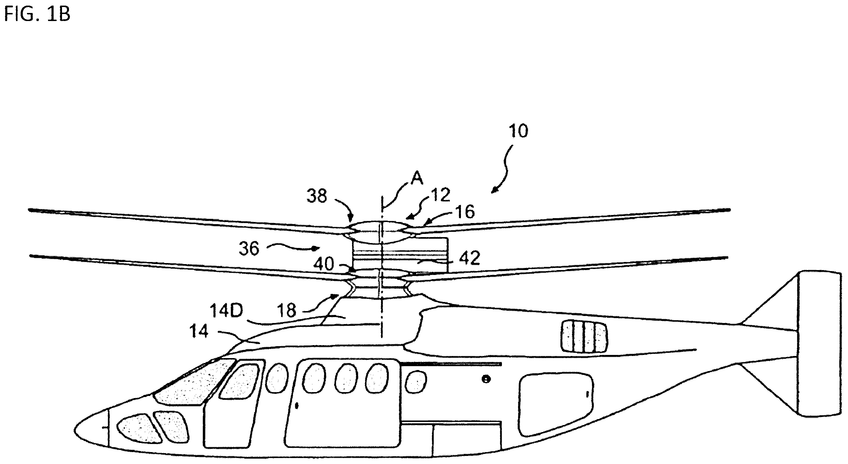

A high speed compound rotary-wing aircraft with a dual, contra-rotating, coaxial rotor system as shown in FIGS. 1A and 1B is capable of travel at higher speeds than conventional single rotor helicopters due in part to the balance of lift between the advancing side of the main rotor blades on the upper and lower rotor systems. In addition, the retreating sides of the rotors are also generally free from classic retreating blade stall that conventional single or tandem rotor helicopters may suffer from.

FIGS. 1A and 1B illustrate an exemplary high speed compound rotary wing aircraft 10 having a dual, counter-rotating, coaxial rotor system 12. The aircraft 10 includes an airframe 14 that supports the dual, counter-rotating, coaxial rotor system 12 as well as a translational thrust system 30 which provides translational thrust generally parallel to an aircraft longitudinal axis L. Although a particular aircraft configuration is illustrated, other rotary wing aircraft configurations are within the scope of the invention.

The dual counter-rotating, coaxial rotor system 12 includes a first rotor system 16, such as an upper rotor system for example, and a second rotor system 18, such as a lower rotor system for example. Each rotor system 16, 18 includes a plurality of rotor blades 20 mounted to a rotor hub assembly 22, 24 for rotation about a rotor axis of rotation A. The plurality of main rotor blades 20 project substantially radially outward from each of the hub assemblies 22, 24 and are connected thereto in any manner known to a person skilled in the art. Any number of rotor blades may be used with the dual counter-rotating, coaxial rotor system 12.

The dual, counter-rotating, coaxial rotor system may be driven by a main gearbox 26 located above the aircraft cabin. A translational thrust system 30 may be mounted to the rear of the airframe 14 with a rotational axis T oriented substantially horizontal and parallel to the aircraft longitudinal axis L to provide thrust for high-speed flight. In one embodiment, the translational thrust system 30 includes a pusher propeller 32 mounted within an aerodynamic cowling 34. The translational thrust system 30 may be driven by the same gearbox 26 that drives the rotor system 12. The main gearbox 26 is driven by one or more engines E and may be positioned between the gas turbine engines E and the translational thrust system 30.

Referring now to FIG. 1B, the rotor system 12 may also include a rotor hub fairing system 36 generally located between the upper and lower rotor systems 16, 18 such that the rotor hubs 22, 24 are at least partially contained therein. It is known that a significant portion of the overall aircraft drag on a vertical take-off and landing (VTOL) aircraft is due to the main rotor system 12. The rotor system drag increases for a rotary wing aircraft 10 having a counter-rotating, coaxial rotor system primarily due to the interconnecting rotor shaft assembly between the upper and lower rotor systems 16, 18. Additionally, the aerodynamic drag on a counter-rotating, coaxial rotor system 12 may be dominated by the pressure drag resulting from large-scale flow separation; typically the skin-friction drag may contribute only about 10% of overall aircraft drag. The rotor hub fairing system 36 achieves a significant drag reduction in which large scale flow separation is greatly reduced.

The rotor hub fairing system 36 includes an upper hub fairing 38, a lower hub fairing 40 and a shaft fairing 42 there between. The rotor hub fairing system 36 is sized and configured to reduce interference effects between the separate fairing components 38, 40, 42 and to minimize flow separation in the junction areas. In one embodiment, the lower hub fairing 40 is sized and configured to follow the contours of the airframe 14 in an area near a pylon 14D. The shaft fairing 42 may follow the contours of the upper hub fairing 38 and the lower hub fairing 40 at the rotational interfaces there between..

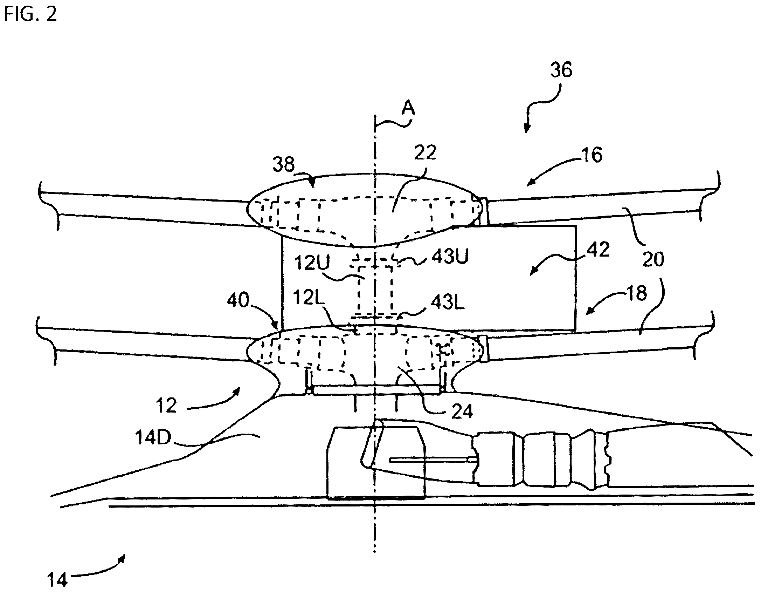

In one embodiment, illustrated in FIG. 2, the shaft fairing 42 is attached to the counter-rotating coaxial rotor system 12 through a bearing arrangement 43U, 43L such that the shaft fairing 42 is aligned with the relative wind in forward flight but is free to pivot about the axis A, such as during low speed maneuvering for example. The upper bearing 43U and the lower bearing 43L are respectively located adjacent an upper portion and a lower portion of the shaft fairing 42. The upper bearing 43U may attach to one rotor shaft while the lower bearing 43L may attach to the other rotor shaft such that the bearings 43U, 43L are counter-rotating and the net bearing drag is relatively low. Other mechanisms for attaching the shaft fairing 42 to the counter-rotating, coaxial rotor system 12 may be used.

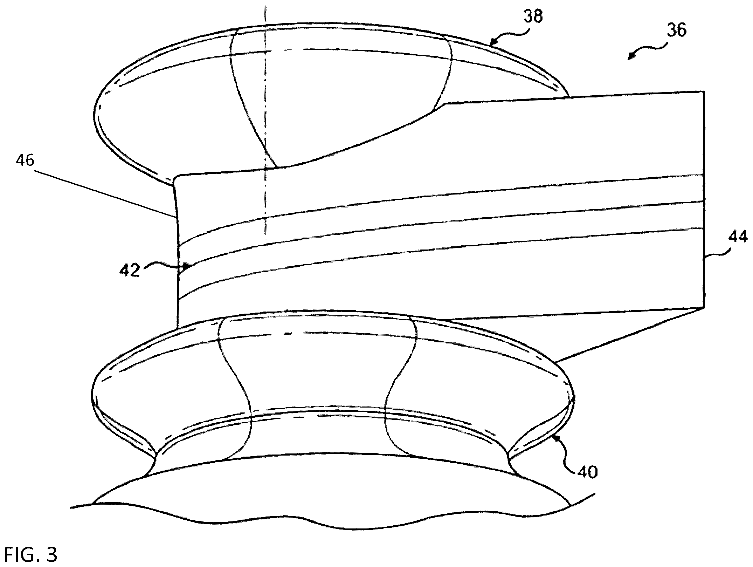

Referring to FIGS. 3-5, various examples of a rotor hub fairing system 36 are illustrated including upper and lower hub fairings 38, 40 having a generally elliptical cross-section. A horizontal cross-section of the shaft fairing 42 has a generally airfoil-type shape. The airfoil shape of the shaft fairing 42 includes a leading edge 46, and a trailing edge 44 aft of the upper and lower fairings 38, 40. The trailing edge 44 extends aft of a periphery defined by the upper hub fairing 38 and the lower hub fairing 40, thereby substantially reducing pressure drag. The airfoil shape of the shaft fairing 42 additionally includes a chord (not shown) that connects the leading and trailing edges 46, 44 of the airfoil. In one embodiment, the airfoil shape, including the upper surface 48 and the lower surface 50, is symmetrical about a plane extending along the length of the shaft fairing 42 and containing the axis of rotation.

When an aircraft 10 including a conventional rotor hub fairing system 36 (see FIG. 3) is in flight, typically an upper wake is formed behind the upper hub fairing 38 and a lower wake is formed behind the lower hub fairing 40. It is found that if the upper wake and the lower wake can be formed collectively by directing the upper wake downward towards the lower wake, an overall improvement in the total aircraft drag is achieved. It is therefore desirable to modify the geometry of the shaft fairing 42 such that the upper and lower wakes form collectively.

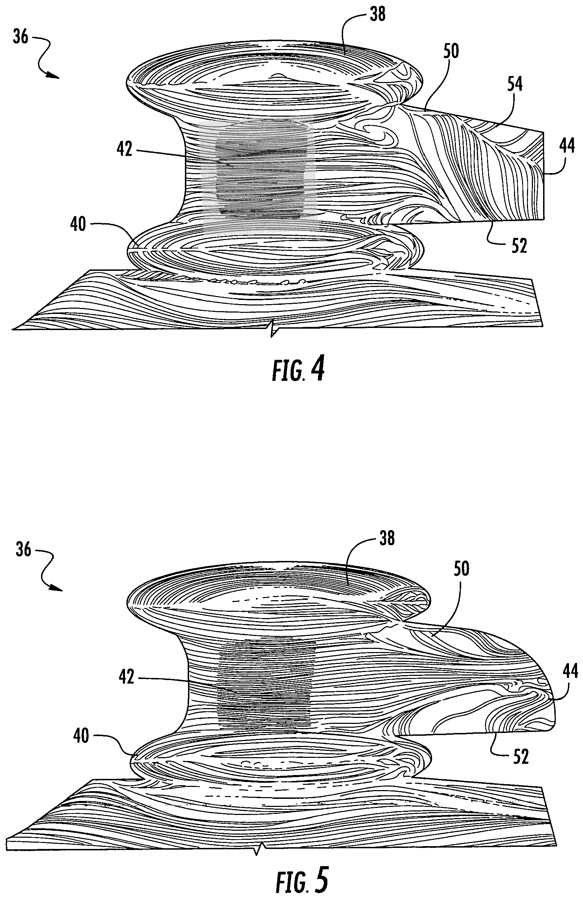

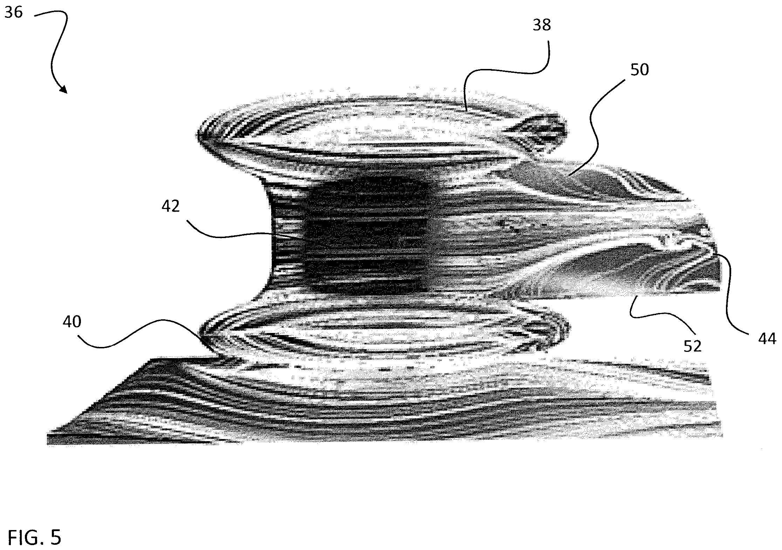

With reference to FIGS. 4 and 5, a shaft fairing 42 having a geometry modified to achieve a collective wake according to the disclosure is illustrated. In one embodiment not covered by the invention, illustrated in FIG. 4, at least a portion of the surface 50 of the shaft fairing 42 positioned adjacent the upper rotor hub 38 is angled or sloped downwards towards the lower hub fairing 40 and an opposite surface 52 of the shaft fairing 42. As shown, the angled portion 54 of the top surface 50 may begin adjacent a periphery of the upper hub fairing 38 and extend to the trailing edge 44. In the illustrated, non-limiting embodiment, the overall height of the shaft fairing 42 at the trailing edge 44 is about 80% of the height of the shaft fairing 42 measured between the hub fairings 38, 40. However, shaft fairings 42 having a top surface 50 with varying degrees of slope are within the scope of the disclosure. In another embodiment, illustrated in FIG. 5, the trailing edge 44 of the shaft fairing 42 is generally curved. More specifically, the top surface 50 of the shaft fairing 42 adjacent the trailing edge 44 thereof may curve generally downward towards the bottom surface 52. As previously suggested, the origin of the curvature may begin generally adjacent the periphery of the upper hub fairing 38 and extend over at least a portion of the trailing edge 44.

The rotor hubs 22, 24 contribute significantly to the drag of an aircraft having a dual, counter-rotating, coaxial rotor system 12. The described modifications to the geometry of the top surface 50 and trailing edge 44 of the shaft fairing 42 encourage the wake formed behind the upper rotor hub fairing 38 to follow the contour of the shaft fairing 42 and drift towards the bottom surface 52 of the shaft fairing 42 and the fuselage 14. Such modifications improve the airflow around the upper rotor hub fairing 38 as well as the shaft fairing 42, resulting in reduced flow separation. The improvements in the airflow result in a drag reduction between about 5-7% during normal flight conditions.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A rotor hub fairing system (36) for use in a counter-rotating, coaxial rotor system comprising:
an upper hub fairing (38) defined about an axis;
a lower hub fairing (40) defined about the axis; and
a shaft fairing (42) disposed between the upper hub fairing (38) and the lower hub fairing (40), wherein a geometry of the shaft fairing (42) is configured to encourage a wake adjacent the upper hub fairing (38) to form collectively with a wake adjacent the lower hub fairing (38);
wherein the shaft fairing (42) includes a trailing edge (44) extending aft of the upper hub fairing (38) and the lower hub fairing (40), at least a portion of the trailing edge (44) being generally curved; and
wherein the shaft fairing (42) includes a top surface (50) positioned adjacent the upper hub fairing (38) and the top surface (50) adjacent the trailing edge (44) curves downward towards a bottom surface (52) of the shaft fairing (42);
wherein at least a portion of the top surface (50) is angled downwardly.
**characterized in that**
the angled portion of the top surface (50) begins at a portion of the top surface (50) adjacent a periphery of the upper hub fairing (38).

2. The rotor hub fairing system (36) according to claim 1, wherein a horizontal cross-section of the shaft fairing (42) is generally airfoil shaped.

3. The rotor hub fairing system (36) according to claim 1 or 2, wherein the shaft fairing (42) has a shape complementary to the upper hub fairing (38) and the lower hub fairing (40).

4. The rotor hub fairing system (36) according to claim 1, wherein the shaft fairing (42) includes a trailing edge (44) extending aft of the upper hub fairing (38) and the lower hub fairing (40) and the angled portion of the top surface (50) extends to the trailing edge (44) such that an overall height of the shaft fairing (42) at the trailing edge (44) is less than an overall height of the shaft fairing (42) between the upper hub fairing (38) and the lower hub fairing (40).

5. A coaxial rotor system (12) comprising:
an upper rotor system (16) including an upper rotor hub (22) which rotates about an axis of rotation and a rotor hub fairing system (36) according to one of the claims 1-4,
wherein the upper hub fairing (38) at least partially surrounds a portion of said upper rotor hub (22);
a lower rotor system (18) including a lower rotor hub (24) which rotates about the axis of rotation;
wherein the lower hub fairing (40) at least partially surrounds a portion of said lower rotor hub (24).

## Patentansprüche

1. Rotornabenverkleidungssystem (36) zur Verwendung in einem gegenläufigen Koaxialrotorsystem, umfassend:
eine obere Nabenverkleidung (38), die um eine Achse definiert ist;
eine untere Nabenverkleidung (40), die um die Achse definiert ist; und
eine Wellenverkleidung (42), die zwischen der oberen Nabenverkleidung (38) und der unteren Nabenverkleidung (40) angeordnet ist, wobei eine Geometrie der Wellenverkleidung (42) dazu konfiguriert ist, zu begünstigen, dass sich ein Sog neben der oberen Nabenverkleidung (38) zusammen mit einem Sog neben der unteren Nabenverkleidung (38) ausbildet;
wobei die Wellenverkleidung (42) eine Hinterkante (44) beinhaltet, die sich hinter der oberen Nabenverkleidung (38) und der unteren Nabenverkleidung (40) erstreckt, wobei mindestens ein Abschnitt der Hinterkante (44) im Allgemeinen gekrümmt ist; und
wobei die Wellenverkleidung (42) eine obere Fläche (50) beinhaltet, die neben der oberen Nabenverkleidung (38) positioniert ist, und sich die obere Fläche (50) neben der Hinterkante (44) nach unten in Richtung einer unteren Fläche (52) der Wellenverkleidung (42) krümmt;
wobei mindestens ein Abschnitt der oberen Fläche (50) nach unten abgewinkelt ist,
**dadurch gekennzeichnet, dass**
der abgewinkelte Abschnitt der oberen Fläche (50) bei einem Abschnitt der oberen Fläche (50) neben einem Umfang der oberen Nabenverkleidung (38) beginnt.

2. Rotornabenverkleidungssystem (36) nach Anspruch 1, wobei ein horizontaler Querschnitt der Wellenverkleidung (42) im Allgemeinen tragflächenförmig ist.

3. Rotornabenverkleidungssystem (36) nach Anspruch 1 oder 2, wobei die Wellenverkleidung (42) eine Form aufweist, welche die oberen Nabenverkleidung (38) und die untere Nabenverkleidung (40) ergänzt.

4. Rotornabenverkleidungssystem (36) nach Anspruch 1, wobei die Wellenverkleidung (42) eine Hinterkante (44) beinhaltet, die sich hinter der oberen Nabenverkleidung (38) und der unteren Nabenverkleidung (40) erstreckt, und der abgewinkelte Abschnitt der oberen Fläche (50) sich zu der Hinterkante (44) erstreckt, sodass eine Gesamthöhe der Wellenverkleidung (42) bei der Hinterkante (44) kleiner als eine Gesamthöhe der Wellenverkleidung (42) zwischen der oberen Nabenverkleidung (38) und der unteren Nabenverkleidung (40) ist.

5. Koaxialrotorsystem (12), umfassend:
ein oberes Rotorsystem (16), das eine obere Rotornabe (22), die um eine Rotationsachse rotiert, und ein Rotornabenverkleidungssystem (36) nach einem der Ansprüche 1-4 beinhaltet,
wobei die obere Nabenverkleidung (38) einen Abschnitt der oberen Rotornabe (22) mindestens teilweise umgibt;
ein unteres Rotorsystem (18), das eine untere Rotornabe (24) beinhaltet, die um die Rotationsachse rotiert;
wobei die untere Nabenverkleidung (40) einen Abschnitt der unteren Rotornabe (24) mindestens teilweise umgibt.

## Revendications

1. Système de carénage de moyeu de rotor (36) destiné à être utilisé dans une contre-rotation, le système de rotor coaxial comprenant :
un carénage de moyeu supérieur (38) défini autour d'un axe ;
un carénage de moyeu inférieur (40) défini autour de l'axe ; et
un carénage d'arbre (42) disposé entre le carénage de moyeu supérieur (38) et le carénage de moyeu inférieur (40), dans lequel une géométrie du carénage d'arbre (42) est configurée pour favoriser la formation d'un sillage adjacent au carénage de moyeu supérieur (38) collectivement avec un sillage adjacent au carénage de moyeu inférieur (38) ;
dans lequel le carénage d'arbre (42) comporte un bord de fuite (44) s'étendant à l'arrière du carénage de moyeu supérieur (38) et du carénage de moyeu inférieur (40), au moins une partie du bord de fuite (44) étant généralement incurvée ; et
dans lequel le carénage d'arbre (42) comporte une surface supérieure (50) positionnée de manière adjacente au carénage de moyeu supérieur (38) et la surface supérieure (50) adjacente au bord de fuite (44) se courbe vers le bas en direction d'une surface inférieure (52) du carénage d'arbre (42) ;
dans lequel au moins une partie de la surface supérieure (50) est inclinée vers le bas ;
**caractérisé en ce que**
la partie inclinée de la surface supérieure (50) commence au niveau d'une partie de la surface supérieure (50) adjacente à une périphérie du carénage de moyeu supérieur (38).

2. Système de carénage de moyeu de rotor (36) selon la revendication 1, dans lequel une section en coupe transversale horizontale du carénage d'arbre (42) est généralement en forme de surface portante.

3. Système de carénage de moyeu de rotor (36) selon la revendication 1 ou 2, dans lequel le carénage d'arbre (42) a une forme complémentaire au carénage de moyeu supérieur (38) et au carénage de moyeu inférieur (40).

4. Système de carénage de moyeu de rotor (36) selon la revendication 1, dans lequel le carénage d'arbre (42) comporte un bord de fuite (44) s'étendant à l'arrière du carénage de moyeu supérieur (38) et du carénage de moyeu inférieur (40) et la partie inclinée de la surface supérieure (50) s'étend vers le bord de fuite (44) de sorte que la hauteur totale du carénage d'arbre (42) au niveau du bord de fuite (44) est inférieure à la haute totale du carénage d'arbre (42) entre le carénage de moyeu supérieur (38) et le carénage de moyeu inférieur (40).

5. Système de rotor coaxial (12) comprenant :
un système de rotor supérieur (16) comportant un moyeu de rotor supérieur (22) qui tourne autour d'un axe de rotation et un système de carénage de moyeu de rotor (36) selon l'une quelconque des revendications 1 à 4,
dans lequel le carénage de moyeu supérieur (38) entoure au moins partiellement une partie dudit moyeu de rotor supérieur (22) ;
un système de rotor inférieur (18) comportant un moyeu de rotor inférieur (24) qui tourne autour de l'axe de rotation ;
dans lequel le carénage de moyeu inférieur (40) entoure au moins partiellement une partie dudit moyeu de rotor inférieur (24).
